# EUROPÄISCHE PATENTSCHRIFT

(11) **EP 1 055 234 B1**
(45) Veröffentlichungstag und Bekanntmachung des Hinweises auf die Patenterteilung: **17.10.2001**
(21) Anmeldenummer: 99904821.8
(22) Anmeldetag: 28.01.1999
(51) Int. Cl.: G11B 7/26, B29C 65/78

(54) **SUBSTRATSCHEIBE**
SUBSTRATE DISK
DISQUE SUPPORT

(30) Priorität: 09.02.1998 DE 19804976
(43) Veröffentlichungstag der Anmeldung: 29.11.2000
(73) Patentinhaber: Steag HamaTech AG, 75447 Sternenfels (DE)
(72) Erfinder: BOCCIO, Louis, J., Miller Place, NY 11764 (US)
(74) Vertreter: Wagner, Karl H., Dipl.-Ing.
(86) Internationale Anmeldenummer: EP9900539
(87) Internationale Veröffentlichungsnummer: WO9940579

(56) Entgegenhaltungen:
- EP-A- 0 170 957
- JP-A- 61 054 055
- US-A- 5 425 450
- PATENT ABSTRACTS OF JAPAN vol. 006, no. 217 (P-152), 30. Oktober 1982 & JP 57 120244 A (HITACHI SEISAKUSHO KK), 27. Juli 1982

## Beschreibung

Die Erfindung betrifft eine Substratscheibe, die aus zwei miteinander verbundenen Substraten besteht, und die ein Mittelloch aufweist.

Substratscheiben dieser Art sind beispielsweise als sogenannte Digital-Video-Disks (auch mit DVD abgekürzt) bekannt und bestehen aus zwei Substraten oder Teilsubstraten, auf denen auf jeweils einer Oberfläche z. B. Digital-Video-Informationen gespeichert sind, und die mit ihren informationsfreien Seiten miteinander verklebt sind. Für das Verbinden der beiden Substrate zu einer Substratscheibe, beispielsweise einer Digital-Video-Disk, sind sehr genau arbeitende Vorrichtungen erforderlich, da die Substrate nicht nur sehr lagegenau übereinander angeordnet werden müssen, sondern der Klebevorgang über die gesamte Scheibenfläche hinweg gleichmäßig und ohne Lufteinschlüsse oder unterschiedlich dicke Klebemittelschichten durchgeführt werden muß, um fehlerfreie Substratscheiben zu erhalten. Darüber hinaus sind die herkömmlichen Vorrichtungen zum Verkleben von zwei Substraten konstruktionsmäßig sehr aufwendig und nehmen einen großen Raum ein. Für das Verkleben müssen die beiden Substrate zueinander möglichst gut ausgerichtet werden, was schwierig ist. Außerdem besteht bei der Nutzung der Substratscheiben die Gefahr, daß sich die beiden Substrate ungewollt voneinander ablösen. So kann es z. B. beim Entnehmen einer DVD aus einer mehrere DVD's enthaltenen Abspieleinrichtung zum Verkanten der DVD's kommen, sodaß sich die Substrate häufig voneinander ablösen. Ein weiterer Nachteil beim Klebevorgang besteht darin, daß das Klebemittel bzw. der Klebelack in das Mittelloch gelangt, da das eine Substrat nach dem Aufbringen des Klebemittels bzw. des Klebelackes im Innenbereich des anderen Substrats auf dieses aufgedrückt wird. Dies führt zu Veränderungen der Innenabmessungen des Mittellochs und zur Beeinträchtigung der Qualität der Substratscheibe.

Aus der EP-A-0 305 199 ist eine magnetische Aufzeichnungsscheibe mit einer Zentriernabe bekannt, bei der das Aufnahmemedium ein über einen starren ringförmigen Träger gespanntes Aufnahmemedium ist. Das Aufnahmemedium wird über innere und äußere erhöhte Kanten gespannt.

Aus der JP-A-081 38 340 ist ferner eine Magnetscheibe bekannt, die durch Verbinden eines Magnetflächenelements mit einem ringartigen Flanschteil einer Mittelnabe verbunden ist.

Ferner sei auf die JP-A-61 054 055 hingewiesen, die zur Formulierung des Oberbegriffs des Anspruchs 1 herangezogen wurde.

Der Erfindung liegt die Aufgabe zu Grunde, Substratscheiben zu schaffen, die mit einer geringen Ausschußquote produzierbar sind und eine höhere Qualität und Lebensdauer aufweisen.

Diese Aufgabe wird erfindungsgemäß dadurch gelöst, daß die dem Substrat mit Vorsprung zugewandte Mittellochkante des Substrats ohne Vorsprung eine Aussparung aufweist, die z. B. konkav ausgeformt sein kann. Diese Aussparung dient als Reservoir für das Klebemittel bzw. den Klebelack, das bzw. der beim Anpressen der Substrate in Richtung des Mittellochs der Substratscheibe fließt.Der Vorsprung an der Mittellochkante des einen Substrats in Kombination mit der Aussparung an dem anderen Substrat verhindert dabei das Ausfließen des Klebemittels nach innen. Außerdem ist die Substratscheibe durch den Vorsprung an der Mittellochkante des einen Substrats besser gegen unbeabsichtigtes Ablösen der beiden Substrate voneinander geschützt, wenn sich die Substrate beispielsweise beim Abheben vom Dorn eines Abspielgeräts verkanten.

Eine vorteilhafte Ausgestaltung der Erfindung ist dadurch gegeben, daß sich der Vorsprung des einen Substrats über den gesamten Umfang des Mittellochs erstreckt. Hierdurch wird sichergestellt, daß das Klebemittel bzw. der Klebelack nach dem Anpressen des einen Substrats an das andere an keiner Stelle des Umfangs der Mittellochkante auf die Mittelloch-Umfangsfläche gelangt. Außerdem wird durch zusätzliches Verkleben der Mittelloch-Umfangsfläche eine besonders stabile Verbindung der beiden Substrate erreicht.

Bei einer weiteren vorteilhaften Ausführungsform der Erfindung ist der Übergang zwischen der Fläche des Substrats und dem Vorsprung abgeschrägt oder abgerundet. Dies ermöglicht bei der Herstellung des Substrates ein leichteres Fließen des Kunststoffs während des Gießvorgangs im Vergleich zu einer rechtwinkligen Ausformung des Übergangs, wodurch die Substrathomogenität und damit die Qualität der Substratscheibe verbessert wird. Außerdem wird durch eine derartige Ausgestaltung der Erfindung die Gefahr des Abbrechens des Vorsprungs wesentlich vermindert und damit die Stabilität der Substratscheibe erhöht.

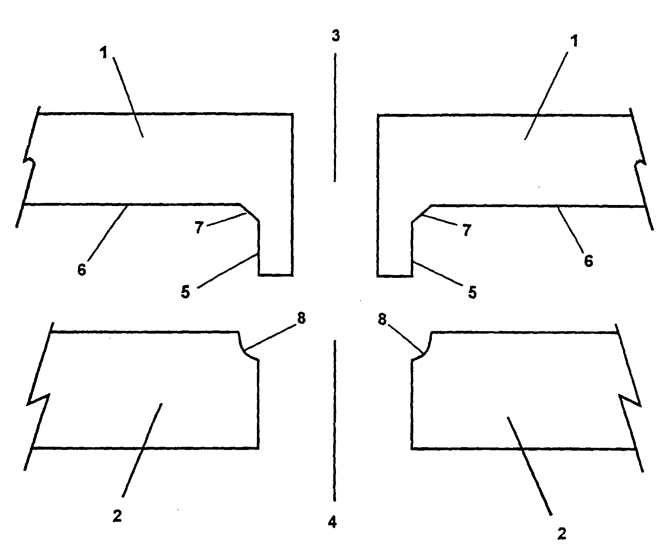

Die Erfindung wird nachfolgend anhand eines bevorzugten Ausführungsbeispiels unter Bezugnahme auf eine einzige Figur erläutert.

Die Figur zeigt zwei Substrate 1, 2 mit jeweils einem Mittelloch 3, 4 die zu einer Substratscheibe, beispielsweise einer DVD, miteinander verklebt werden. In der Figur sind die beiden Substrate 1, 2 jeweils nur in ihrem Mittelbereich dargestellt.

Das obere Substrat 1 weist am Rande des Mittellochs 3 einen umlaufenden Vorsprung 5 auf, der von einer dem anderen Substrat 2 zugewandten Fläche 6 absteht und diesem unteren Substrat 2 zugewandt ist. Der Innendurchmesser des Vorsprungs 5 bildet den Durchmesser eines Mittellochs' 3 der fertigen Substratscheibe und beträgt bei einer DVD üblicherweise 15 mm. Der Übergang 7 zwischen dem Vorsprung 5 und der Fläche 6 des Substrats 1 ist bei dem dargestellten Ausführungsbeispiel schräg ausgebildet. Dies erleichtert nicht nur den Herstellungsvorgang bei der Fertigung des Substrats 1 durch Gießen, sondern trägt auch zu einer größeren Stabilität und Festigkeit des Vorsprungs 5 bei.

Das untere Substrat 2 weist keinen Vorsprung auf, und dementsprechend ist der Durchmesser von dessen Mittelloch 4 etwas größer als der Außendurchmesser des Vorsprungs 5 gewählt. Dadurch befindet sich der Vorsprung 5 des oberen Substrats 1 bei zusammengelegten Substraten 1, 2 im Mittelloch 4 des unteren Substrats 2.

Bei Herstellung der Substratscheibe durch Verkleben der beiden Substrate 1, 2 wird auf das untere Substrat 2 in der Nähe des Mittellochs 4 Klebemittel etwa in einem umlaufenden Kranz aufgebracht. Danach wird das obere Substrat 1 auf das untere Substrat 2 aufgelegt und etwas angepreßt, bevor die beiden aufeinanderliegenden Substrate gedreht werden, damit sich das Klebemittel durch die Zentrifugalkraft gleichmäßig bis zum äußeren Rand der Substrate verteilt, und sich eine gleichmäßige und insbesondere auch gleichmäßig dicke Klebeschicht ausbildet. Verfahren und Vorrichtungen zum Verkleben von Substraten zu Substratscheiben sind beispielsweise in der auf dieselbe Anmelderin zurückgehenden, nicht vorveröffentlichten DE 197 18 471 A1 beschrieben.

Während des Auflegens des oberen Substrats 1 auf das untere Substrat 2 und/oder bei Ausüben eines gewissen Drucks vor dem Schleudervorgang wird Klebemittel auch in Richtung auf das Mittelloch 4 hin gedrückt und gelangt in das Mittelloch 4, so daß bei herkömmlichen Substratscheiben Verunreinigungen in diesem Bereich auftreten und keine definierten Mittellochdurchmesser mehr sichergestellt sind. Durch den Vorsprung 5 wird dieses Austreten an Klebemittel auf die Innenfläche des Mittellochs verhindert, weil der Vorsprung 5 das Ausfließen nicht zuläßt. Um ganz sicher zu gehen, und insbesondere auch große Toleranzbereiche bei der Menge des aufzubringenden Klebemittels zu haben, ist das untere Substrat 2 an der dem oberen Substrat 1 zugewandten Kante seines Mittellochs 4 mit einer Ausnehmung 8 - im dargestellten Ausführungsbeispiel als konkave Nut ausgebildet - versehen. Diese Ausnehmung 8 dient als Aufnahmeraum für überschüssiges Klebemittel, so daß dadurch mit Sicherheit ein Ausfließen und ein Verunreinigen im Mittellochbereich der Substratscheibe auch dann vermieden wird, wenn die Menge des überschüssigen Klebemittels groß ist.

Der Vorsprung 5 steht gemäß dem dargestellten Ausführungsbeispiel vorzugsweise soweit von der Fläche 6 des Substrats 1 ab, daß er im zusammengesetzten Zustand der beiden Substrate 1, 2 die Umfangsflächen des Mittellochs 4 des unteren Substrats 2 voll abdeckt. Auf diese Weise ergibt sich gegenüber herkömmlichen Substratscheiben ein definierter Innenumfang des Mittellochs 3 der fertigen Scheibe mit glatten, klebstoffreien Flächen, was für die Benutzung dieser Scheiben z. B. in Abspielgeräten für die Handhabung von großem Vorteil ist. Durch den Vorsprung 5 ist auch der Verbindungsbereich zwischen den Substraten geschützt und die Gefahr eines Ablösens der Scheiben während der Benutzung, insbesondere beim Herausheben vom Dorn des Abspielgeräts, gering.

Die Erfindung wurde zuvor anhand eines bevorzugten Ausführungsbeispiels beschrieben. Dem Fachmann sind jedoch Abwandlungen und Ausgestaltungen der Erfindung und des Ausführungsbeispiels möglich, ohne daß dadurch der Erfindungsgedanke verlassen wird. Beispielsweise ist es möglich, während des Herstellungsvorgangs entgegen dem dargestellten Ausführungsbeispiel das Substrat 1 mit Vorsprung 5 als unteres Substrat vorzusehen und auf ihm das Klebemittel aufzubringen und danach das vorsprungfreie Substrat 2 auf das Substrat 1 mit Vorsprung 5 aufzulegen, wobei auch in diesem Falle wieder die sichere Ausrichtung der beiden Substrate zueinander durch den Vorsprung 5 ohne weitere Ausricht-Hilfsmittel und sehr zuverlässig möglich ist.

## Patentansprüche

1. Substratscheibe, die aus zwei miteinander verbundenen Substraten (1, 2) besteht, und die ein Mittelloch (3) aufweist, wobei eines der die Substratscheibe bildenden Substrate (1) an der Mittellochkante wenigstens einen aus der Substratfläche (6) abstehenden Vorsprung (5) aufweist, der zumindest teilweise in eine Mittelöffnung (4) des anderen Substrats (2) eingreift, **dadurch gekennzeichnet, daß** die dem einen Substrat (1) zugewandte Innenkante des vorsprungsfreien Substrats (2) eine Aussparung (8) aufweist..

2. Substratscheibe nach Anspruch 1, **dadurch gekennzeichnet, daß** sich der Vorsprung (5) über den gesamten Umfang des Mittellochs (3) erstreckt.

3. Substratscheibe nach Anspruch 1, **dadurch gekennzeichnet, daß** mehrere untereinander mit gleichem Umfangswinkel beabstandete Vorsprünge (5) vorgesehen sind.

4. Substratscheibe nach einem der vorhergehenden Ansprüche, **dadurch gekennzeichnet, daß** der Vorsprung (5) des Substrats (1) bei aufeinander gelegten Substraten (1, 2) wenigstens einen Teil der Mittelloch-Innenfläche des anderen Substrats (2) abdeckt.

5. Substratscheibe nach einem der vohergehenden Ansprüche, **dadurch gekennzeichnet, daß** der MittellochDurchmesser des Substrats (2), das keinen Vorsprung (5) aufweist, geringfügig größer als der Außenumfang des Vorsprungs (5) des den Vorsprung (5) aufweisenden Substrats (1) ist.

6. Substratscheibe nach einem der vorhergehenden Ansprüche, **dadurch gekennzeichnet, daß** die Aussparung (8) konkav ausgeformt ist.

7. Substratscheibe nach einem der vorhergehenden Ansprüche, **gekennzeichnet durch** einen abgeschrägten Übergang (7) zwischen der Substratfläche (6) und dem Vorsprung (5).

8. Substratscheibe nach einem der Ansprüche 1 bis 7, **gekennzeichnet durch** einen abgerundeten Übergang zwischen der Substratfläche (6) und dem Vorsprung (5).

9. Substratscheibe nach einem der vorhergehenden Ansprüche, **dadurch gekennzeichnet, daß** sich der Vorsprung (5) über die gesamte Axiallänge der Mittelöffnung (4) des anderen Substrats (2) erstreckt.

## Claims

1. Substrate disk consisting of two substrates (1, 2) which are connected to one another and have a centre hole (3), wherein one of the substrates (1, 2) forming the substrate disk is provided at the edge of the center hole with at least one projection (5) which projects from the substrate face (6) and engages at least partially in a central opening (4) of the other substrate (2), **characterised in that** the inner edge of the projection-free substrate (2) that faces the one substrate (1) has a recess (8).

2. Substrate disk according to claim 1, **characterised in that** the projection (5) extends over the entire circumference of the center hole (3).

3. Substrate disk according to claim 1, **characterised in that** a number of projections (5) spaced from one another by the same circumferential angle are provided.

4. Substrate disk according to one of the preceding claims, **characterised in that** the projection (5) of the substrate (1) covers at least a portion of the inner surface of the center hole when the substrates (1, 2) are placed upon one another.

5. Substrate disk according to one of the preceding claims, **characterised in that** the diameter of the center hole of the substrate (2), which has no projection (5), is slightly greater than the outer circumference of the projection (5) of the substrate (1) having the projection (5).

6. Substrate disk according to any one of the preceding claims, **characterised in that** the recess (8) has a concave shape.

7. Substrate disk according to any one of the preceding claims, **characterised by** a slanted transition (7) between the substrate face (6) and the projection (5).

8. Substrate disk according to one of claims 1 to 7, **characterised by** a rounded transition between the substrate face 6 and the projection (5).

9. Substrate disk according to any one of the preceding claims, **characterised in that** the projection (5) extends over the entire axial length of the center opening (4) of the other substrate (2).

## Revendications

1. Disque de substrat qui est constitué de deux substrats (1, 2) reliés l'un à l'autre et qui présente un trou central (3), où l'un des substrats (1) formant le disque de substrat présente à l'arête du trou central au moins une saillie (5) dépassant de la face de substrat (6) qui s'engage au moins partiellement dans une ouverture centrale (4) de l'autre substrat (2), **caractérisé en ce que** l'arête intérieure du substrat sans saillie (2) orientée vers le substrat (1) présente un évidement (8).

2. Disque de substrat selon la revendication 1, **caractérisé en ce que** la saillie (5) s'étend sur tout le pourtour du trou central (3).

3. Disque de substrat selon la revendication 1, **caractérisé en ce que** sont prévues plusieurs saillies (5) espacées les unes des autres selon le même angle périphérique.

4. Disque de substrat selon l'une des revendications précédentes, **caractérisé en ce que** la saillie (5) du substrat (1), lorsque les substrats (1, 2) sont posés l'un sur l'autre, couvrent au moins une partie de la face interne du trou central de l'autre substrat (2).

5. Disque de substrat selon l'une des revendications précédentes, **caractérisé en ce que** le diamètre du trou central du substrat (2) qui ne présente pas de saillie (5), est légèrement plus grand que le pourtour extérieur de la saillie (5) du substrat (1) présentant la saillie (5).

6. Disque de substrat selon l'une des revendications précédentes, **caractérisé en ce que** l'évidement (8) est réalisé d'une manière concave.

7. Disque de substrat selon l'une des revendications précédentes, **caractérisé par** un passage chanfreiné (7) entre la face de substrat (6) et la saillie (5).

8. Disque de substrat selon l'une des revendications 1 à 7, **caractérisé par** un passage arrondi entre la face de substrat (6) et la saillie (5).

9. Disque de substrat selon l'une des revendications précédentes, **caractérisé en ce que** la saillie (5) s'étend sur toute la longueur axiale de l'ouverture centrale (4) de l'autre substrat (2).
